# EUROPÄISCHE PATENTSCHRIFT

(11) **EP 3 276 087 B1**
(45) Veröffentlichungstag und Bekanntmachung des Hinweises auf die Patenterteilung: **05.09.2018**
(21) Anmeldenummer: 17170144.4
(22) Anmeldetag: 09.05.2017
(51) Int. Cl.: E02F 3/16, E02F 3/26, E02F 9/26, G01B 21/22

(54) **WINKELMESSSYSTEM**
ANGLE MEASURING SYSTEM
SYSTÈME DE MESURE D'ANGLE

(30) Priorität: 25.07.2016 DE 102016009039
(43) Veröffentlichungstag der Anmeldung: 31.01.2018
(73) Patentinhaber: Liebherr-Hydraulikbagger GmbH, 88457 Kirchdorf (DE)
(72) Erfinder: Angele, Rainer, 88471 Laupheim (DE); Roschmann, Michael, 86424 Dinkelscherben Grünenbaindt (DE); Stanger, Sebastian, 88457 Kirchdorf (DE); Graf, Matthias, 87561 Oberstdorf (DE)
(74) Vertreter: Laufhütte, Dieter

(56) Entgegenhaltungen:
- EP-A2- 2 503 062
- GB-A- 2 222 997
- JP-A- 2000 054 423

## Beschreibung

Die vorliegende Erfindung betrifft ein Winkelmesssystem, das beispielsweise an einem Schwenkantrieb den Winkel zwischen zwei verschwenkbaren Maschinenbestandteilen bestimmen kann. Dabei ist die genaue Bestimmung des Winkels von Vorteil, da dieser die Genauigkeit der Maschinensteuerung erhöht und somit zur Verfügung stehende Arbeitsräume optimal ausgenutzt werden können. Für Hersteller von Maschinen mit bewegbaren Elementen ist neben der Genauigkeit auch die funktionale Sicherheit der hergestellten Maschinen von großer Bedeutung. So wird in der europäischen Norm 13849-1 die Ausfallwahrscheinlichkeit einer Sicherheitsfunktion in unterschiedliche Performance-Level eingeteilt.

Je höher hierbei das Performance-Level angesiedelt ist, desto herausfordernder sind die bezüglich der Sicherheit der Maschine umzusetzenden Funktionalitäten. So kommt bei höheren Performance-Leveln neben der Forderung einer bestimmten Ausfallwahrscheinlichkeit noch zusätzlich die Forderung auf, für die Sicherheit relevante Systeme, wie sie beispielsweise Winkelmesssysteme sind, redundant aufzubauen und mit einer Fehlerdiagnose zu versehen. Dadurch soll beim Auftreten eines Fehlers innerhalb der von der Maschine bereitgestellten Sicherheitsfunktion die Maschine in einen sicheren Zustand schalten und eine Fehlerdiagnose liefern. Der hierbei definierte sichere Zustand könnte beispielsweise eine Bremsung oder der Stopp aller Bewegungen der Maschine sein. So wird sichergestellt, dass ein Fehler der Maschine nicht zu einer unerwarteten Reaktion der Maschine selbst führt.

In diesem Zusammenhang erweist sich insbesondere dann, wenn ein Element der Sicherheitsfunktion auf physikalisch unterschiedlichen Grundsätzen basiert, die Fehlerdiagnose als problematisch.

So wird bei einem Winkelmesssystem typischerweise ein Potentiometer vorgesehen, der mithilfe einer mechanischen Drehung und der hieraus resultierenden Veränderung des vom Potentiometer ausgegebenen Widerstandswerts die Bestimmbarkeit eines Winkels ermöglicht. Auch wenn das Potentiometer hierbei elektrisch mehrkanalig an die Maschinensteuerung angeschlossen ist und somit auf elektrische Fehler (Kurzschluss, Kabelbruch etc.) überprüft werden kann, so ist es trotzdem nicht möglich, die Diagnose eines mechanischen Fehlers zu realisieren, der sich auf eine fehlerhafte Drehstellung des Potentiometers auswirkt.

Um die in der europäischen Norm 13849-1 eingeführten Performance-Level zu erreichen, ist es im Stand der Technik daher üblich, eine Redundanz der gesamten Winkelmesssysteme zu schaffen. Durch das Vorsehen von mindestens zwei separaten Winkelmesssystemen ergeben sich jedoch aufgrund Toleranzen der mechanischen Bauteile voneinander abweichende Sensorsignale, die zu einem Toleranzfenster bei der Winkelmessung von ca. 8° liegt. Dieses Toleranzfenster führt zu einem schlechten Ausnutzen von tatsächlich vorhandenen Arbeitsräumen und zu einer sehr ungenauen Winkelmessung. Zudem ergeben sich durch das redundante Vorsehen von den Winkelmesssystemen ein erhöhter Montageaufwand und erhöhte Materialkosten.

Es ist das Ziel der vorliegenden Erfindung die vorgenannten Nachteile zu überwinden und dabei trotzdem eine Fehlerdiagnose der mechanischen Verbindung zu ermöglichen.

Dies gelingt mit einem Winkelmesssystem, das die Merkmale des Anspruchs 1 umfasst. Demnach umfasst das erfindungsgemäße Winkelmesssystem zum Messen eines Winkels zwischen einem ersten Schenkel und einem zweiten Schenkel mindestens eine Winkelerfassungseinheit zum Bestimmen eines Winkelversatzes zwischen einem drehfest an dem ersten Schenkel angeordneten Winkelelement und einem dazu drehbar angeordneten Stellglied, einen Mitnehmer, der an dem zweiten Schenkel angeordnet ist, und einen Hebel, der das Stellglied mit dem Mitnehmer verbindet, wobei der Hebel bei einer Drehung zwischen dem ersten Schenkel und dem zweiten Schenkel eine entsprechende Drehbewegung des Stellglieds in Bezug auf das Winkelelement ausführt. Das Winkelmesssystem ist dadurch gekennzeichnet, dass es ferner einen Schalter umfasst, der zwei Schalterelemente aufweist, wobei ein erstes Schalterelement an dem Hebel angeordnet ist, der das Stellglied mit dem Mitnehmer verbindet, ein zweites Schalterelement an dem ersten Schenkel oder dem zweiten Schenkel befestigt ist, und der Schalter dazu ausgelegt ist, einen ersten Schaltzustand bei einer korrekten Ausrichtung von Hebel zu dem entsprechenden Schenkel und einen zweiten Schaltzustand bei Verlassen dieser korrekten Ausrichtung einzunehmen.

Durch das Anordnen des ersten Schalterelements an dem Hebel und des zweiten Schalterelement an dem ersten oder dem zweiten Schenkel ist es möglich, einen mechanischen Fehler an dem Hebel bzw. eine Fehlausrichtung des Hebels zu erfassen. Bei einer korrekten Ausrichtung des Hebels zu dem ersten bzw. dem zweiten Schenkel kann beispielsweise vorgesehen sein, dass der Schalter sich in einem bestimmten ersten Zustand befindet, wohingegen bei einem mechanischen Fehler, der durch äußere Krafteinwirkung herbeigeführt werden kann, die für eine Winkelmessung erforderliche korrekte Ausrichtung von Hebel zu dem ersten bzw. dem zweiten Schenkel nicht mehr eingehalten wird, sodass der Schalter in einen zweiten Schaltzustand übergeht. Anhand dieses Übergangs bzw. anhand des Detektierens des zweiten Schaltzustands kann dann auf einen mechanischen Fehler geschlossen werden, sodass klar ist, dass der durch die Winkelerfassungseinheit bestimmte Winkel nicht der tatsächlichen Winkelverschiebung der beiden Schenkeln entspricht.

Vorzugsweise umfasst das Winkelmesssystem ferner ein Mittel zur Fehlererkennung, das dazu ausgelegt ist, ein Sensorsignal von der mindestens einen Winkelerfassungseinheit zu erfassen und, wenn das Sensorsignal einen vorbestimmten Signalbereich verlässt, auf einen Fehler zu schließen. So kann durch die Fehlererkennung beispielsweise ein Kabelbruch erkannt werden und ein geeignetes Fehlersignal von dem Winkelmesssystem an übergeordnete Instanzen ausgegeben werden. Bei einem Kabelbruch verlässt das von der Fehlererkennung erfasste Sensorsignal den vorbestimmten Wertebereich, da nun überhaupt kein Sensorsignal durch die Fehlererkennung erfasst wird, und schließt auf einen Fehler.

Gemäß einer weiteren optionalen Fortbildung der Erfindung ist der Schalter mit dem Sensorsignal der mindestens einen Winkelerfassungseinheit in Reihe geschaltet, wobei das Mittel zur Fehlererkennung bei einem Ändern des Schaltzustands dazu ausgelegt ist, auf einen Fehler zu schließen. Indem der Schalter in Reihe zu dem Sensorsignal der mindestens einen Winkelerfassungseinheit geschaltet ist, wird ein Verlassen der korrekten Ausrichtung von dem an dem Hebel angeordneten ersten Schalterelement bezüglich des an dem ersten Schenkel oder dem zweiten Schenkel befestigten zweitem Schalterelement erkannt und auf einen Fehler geschlossen. Dadurch ist sichergestellt, dass im Falle des Versagens eines oder mehrerer der mechanischen Bauteile (Mitnehmer, Hebel, Gehäuse der Winkelerfassungseinheit, Befestigungsteile oder dergleichen) die Fehlererkennung einen Fehlerfall erkennt.

Gemäß einer optionalen Fortbildung der Erfindung ist eines der beiden Schalterelemente ein Reed-Sensor und das andere Schalterelement ein den Reed-Sensor betätigbares Gegenelement, insbesondere ein Reed-Kontakt.

Als den Reed-Sensor betätigbares Gegenelement kommt insbesondere ein Magnet in Frage, der bei korrekter Positionierung gegenüber dem Reed-Sensor dazu führt, dass dieser in einem leitenden Zustand ist, wohingegen mit zunehmender räumlicher Entfernung des Magneten die auf den Reed-Sensor wirkende Magnetkraft nachlässt und der Reed-Sensor in einen offenen Zustand übergeht.

Vorzugsweise ist der Schalter ein berührender Schalter oder ein berührungsloser Schalter.

Gemäß einer weiteren Modifikation der Erfindung ist das zweite Schalterelement in ein Gehäuse der am ersten Schenkel befindlichen Winkelerfassungseinheit integriert.

Nach einer weiteren Fortbildung der Erfindung ist die Verbindung zwischen Mitnehmer und Hebel stabiler ausgebildet als eine Verbindung zwischen Hebel und Stellglied, wobei vorzugsweise die Verbindung zwischen Hebel und Stellglied bei einer mechanischen Krafteinwirkung auf den Hebel eine Sollbruchstelle darstellt. Insbesondere bei der Anordnung des zweiten Schalterelements in einem Gehäuse der am ersten Schenkel befindlichen Winkelerfassungseinheit ist es von Vorteil, dass die Verbindung zwischen Mitnehmer und Hebel stabiler als eine Verbindung zwischen Hebel und Stellglied ist. Dadurch kann sichergestellt werden, dass bei einer mechanischen Krafteinwirkung auf den Hebel nicht etwa die Verbindung des Hebels mit dem Mitnehmer gelöst wird sondern die Verbindung zwischen Hebel und Stellglied. Das Lösen der Verbindung zwischen Mitnehmer und Hebel könnte unter Umständen zur Folge haben, dass trotz eines tatsächlich vorliegenden mechanischen Schadens, der dazu führt, dass die Ergebnisse der Winkelerfassungseinheit nicht den tatsächlichen Zustand eines Winkelversatzes zwischen erstem und zweitem Schenkel wiedergibt, der Schalter aufgrund eines zufälligen Verbleibens der beiden Schalterelemente in der korrekten Ausrichtung oder nahe der korrekten Ausrichtung seinen Schaltzustand nicht ändert. Dann wäre der Fall eingetreten, dass trotz eines mechanischen Schadens kein Fehler detektiert wird. Von daher ist es von Vorteil, wenn die Verbindung zwischen Hebel und Stellglied weniger stabil ausgeführt ist, um bei einer mechanischen Krafteinwirkung auf den Hebel ein Nachgeben an dieser Stelle zu provozieren. Insgesamt lässt sich hierdurch ein Fehler auf zuverlässigere Art und Weise detektieren.

Gemäß einer weiteren optionalen Modifikation der Erfindung sind in einem an dem ersten Schenkel angeordneten Gehäuse mindestens zwei Winkelerfassungseinheiten vorhanden, um eine Redundanz in der Winkelerfassung zu erhalten und eine Genauigkeit bei der Winkelerfassung zu verbessern.

Gemäß einer Ausführungsvariante ist hierbei der Schalter mit den zwei von den Winkelerfassungseinheiten ausgegebenen Sensorsignalen in Reihe geschaltet. Alternativ hierzu ist jedoch auch möglich, dass der Schalter mit einem der mindestens zwei Winkelerfassungseinheiten in Reihe geschaltet ist. Dann werden allerdings zwei Schalter benötigt

Gemäß einer weiteren bevorzugten Ausführungsform der Erfindung ist die Winkelerfassungseinheit ein Potentiometer, das durch ein Verstellen des den Widerstandswert des Potentiometers beeinflussenden Stellglieds einen Rückschluss auf einen Winkelversatz ermöglicht. Durch eine mechanische Drehung des Stellglieds erfährt das Potentiometer eine Veränderung der Widerstandswerte, wodurch auf eine bestimmte Winkelstellung des Stellglieds geschlossen werden kann. Das Stellglied bzw. die Welle des Potentiometers wird nach der Erfindung über den mechanischen Hebel und den Mitnehmer an den zweiten Schenkel angeschlossen, sodass über diese Konstruktion eine Winkeländerung des zweiten Schenkels bezüglich des ersten Schenkels durch das Potentiometer erfassbar ist.

Vorzugsweise sind der erste Schenkel und der zweite Schenkel zueinander nur entlang einer Drehachse verdrehbar. Dabei kann zudem vorgesehen sein, dass die auf den ersten Schenkel befestigten Teile der Winkelerfassungseinheit direkt auf dieser Drehachse angeordnet sind.

Auch wenn zuvor die Winkelerfassungseinheit als Potentiometer beschrieben ist, gibt es auch andere Winkelmesssysteme, mit denen die Erfindung umgesetzt werden kann. Die Mechanik "Überwachung mit Schalter" funktioniert mit jedem Winkelmesssystem, beispielsweise auch mit einem Winkelmesssystem auf dem Prinzip eines Hall-Gebers, bei dem sich der Ausgangsstrom in Abhängigkeit des Drehwinkels ändert.

Die Erfindung umfasst zudem eine Arbeitsmaschine, insbesondere einen Hydraulikbagger, der ein Winkelmesssystem nach einer der vorhergehenden Ausführungen umfasst, wobei vorzugsweise der erste Schenkel ein erstes starres Element eines Baggerarms ist und der zweite Schenkel ein zweites starres Element des Baggerarms ist, das an dem ersten starren Element drehbar angelenkt ist.

Weitere Vorteile, Merkmale und Details werden anhand der nachfolgenden Beschreibung der Figuren ersichtlich. Dabei zeigen:
- Fig. 1:: eine perspektivische Darstellung des erfindungsgemäßen Winkelmesssystems, und
- Fig. 2:: eine perspektivische Darstellung eines Teils des erfindungsgemäßen Winkelmesssystems.

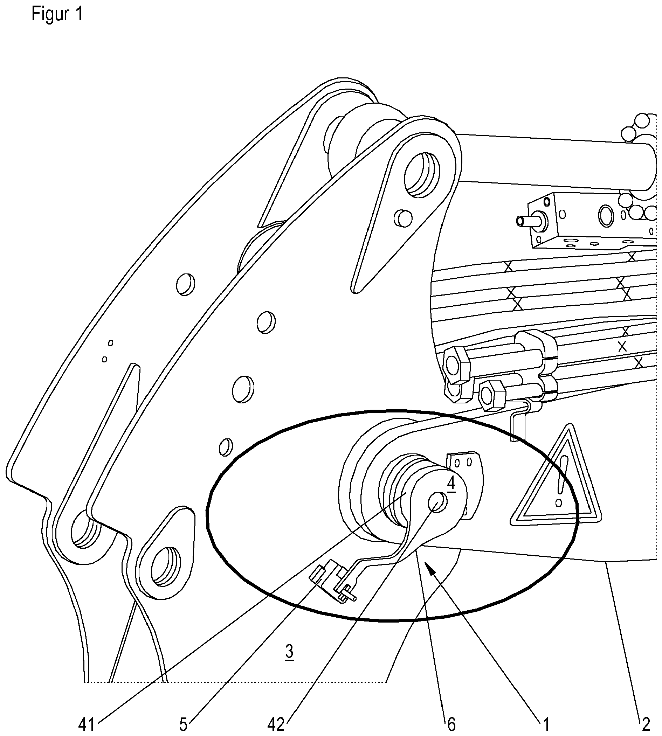

Fig. 1 zeigt ein Winkelmesssystem zur Bestimmung des Winkels zwischen einem ersten Schenkel 2 und einem zweiten Schenkel 3. Wie in der Figur dargestellt, ist es möglich, dass der erste Schenkel 2 und der zweite Schenkel 3 Elemente eines Baggerarms sind, die typischerweise über ein Drehgelenk miteinander verbunden sind. Ferner erkennt man eine Winkelerfassungseinheit 4, die an dem ersten Schenkel 2 angeordnet ist. Das drehfest an dem ersten Schenkel 2 angeordnete Winkelelement 41 bleibt bei einer Winkeländerung der beiden Schenkel zueinander starr an dem ersten Schenkel 2 angeordnet. Bezüglich des ersten Schenkels 2 ist das Stellglied 42 drehbar angeordnet, sodass anhand dessen Drehstellung die Winkelerfassungseinheit 4 einen Winkel bestimmen kann. Das Stellglied 42 ist darüber hinaus drehfest mit einem Hebel 6 verbunden, der an seinem vom Stellglied 42 beabstandeten Ende mit einem Mitnehmer 5 zusammenwirkt, der an dem zweiten Schenkel 3 angeordnet ist.

Der zweite Schenkel 3 ist bezüglich des ersten Schenkels 2 um eine Drehachse rotierbar, sodass durch ein Rotieren des zweiten Schenkels 3 der mit dem zweiten Schenkel 3 in Verbindung stehende Hebel 6 eine Drehbewegung auf das Stellglied 42 der Winkelerfassungseinheit 4 weitergibt.

Kommt es aufgrund einer mechanischen Krafteinwirkung oder anderer Effekte zu einer Beschädigung des Hebels 6, der die übereinstimmende Ausrichtung des Hebels 6 bzw. des Stellglieds 42 zu dem zweiten Schenkel 3 auflöst, ist die korrekte Winkelerfassung der beiden Schenkel 2, 3 zueinander nicht mehr durch das Winkelmesssystem 1 gewährleistet. Von daher ist es erforderlich, diesen Zustand festzustellen und eine Fehlermeldung zu generieren. Im vorliegenden in Figur 1 dargestellten Beispiel ist denkbar, die abgebildete Arbeitsmaschine in einen sicheren Zustand zu verfahren oder jegliche Bewegung bei Detektieren eines Fehlersignals zu unterbinden.

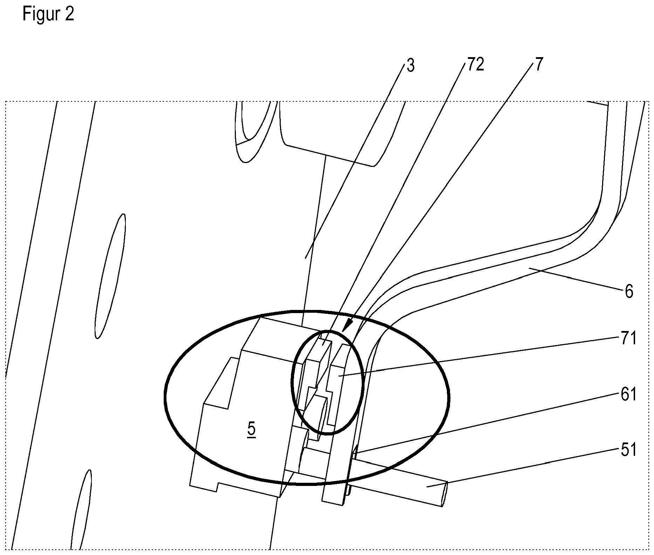

Fig. 2 zeigt einen Teil einer Ausführungsform der vorliegenden Erfindung, nämlich den Mitnehmer 5, der an dem zweiten Schenkel 3 angeordnet ist, in einer vergrößerten Darstellung. Der zum ersten Schenkel 2 führende Hebel 6 ist an seinem vom Stellglied 42 beabstandeten Ende mit einer gabelförmigen Aufnahme versehen 61, die mit einem stabförmigen Element 51 des Mitnehmers 5 zusammenwirkt. Dabei ist das gabelförmige Ende 61 des Hebels 6 mit dem stabförmigen Element 51 des Mitnehmers derart verbunden, dass bei einer Drehung des zweiten Schenkels 3 entlang des Drehgelenks mit dem ersten Schenkel 2 der Hebel 6 eine entsprechende Rotation durchführt.

Ferner ist an dem Hebel 6 ein erstes Schalterelement 71 vorgesehen, das an der dem zweiten Schenkel 3 zugewandten Seite des Hebels 6 angeordnet ist. Dem ersten Schalterelement 71 gegenüberliegend ist ein zweites Schalterelement 72 an dem Mitnehmer 5 angeordnet, wobei bei korrekter Ausrichtung der beiden Schalterelemente zueinander der die beiden Schalterelemente 71, 72 umfassende Schalter 7 einen ersten Schaltzustand einnimmt. Erfolgt hingegen aufgrund einer mechanischen Krafteinwirkung oder anderer Effekte eine Umpositionierung der beiden Schalterelemente 71, 72 zueinander, führt dies zu einem Zustandswechsel des Schalters 7, der durch eine Fehlererkennungseinheit detektierbar ist.

Dabei ist vorgesehen, dass der Schalter in Reihe mit den Sensorsignalen der Winkelerfassungseinheit geschaltet ist, sodass die Änderung des Schaltzustands (beispielsweise von einem geschlossenen Zustand zu einem offenen Zustand) im Zuge der Auswertung der Sensorsignale erfasst werden kann.

In Fig. 2 ist der Schalter 7 als ein berührungsloser Schalter dargestellt, wobei jedoch für die Zwecke der Erfindung auch ein berührender Schalter eingesetzt werden kann.

## Patentansprüche

1. Winkelmesssystem (1) zum Messen eines Winkels zwischen einem ersten Schenkel (2) und einem zweiten Schenkel (3), umfassend:
mindestens eine Winkelerfassungseinheit (4) zum Bestimmen eines Winkelversatzes zwischen einem drehfest an dem ersten Schenkel (2) angeordneten Winkelelement (41) und einem dazu drehbar angeordneten Stellglied (42),
einen Mitnehmer (5), der an dem zweiten Schenkel (3) angeordnet ist, und
einen Hebel (6), der das Stellglied (42) mit dem Mitnehmer (5) verbindet, wobei
der Hebel (6) bei einer Drehung zwischen dem ersten Schenkel (2) und dem zweiten Schenkel (3) eine entsprechende Drehbewegung des Stellglieds (42) in Bezug auf das Winkelelement (41) ausführt,
**gekennzeichnet durch**
ein Schalter (7), der zwei Schalterelemente (71, 72) aufweist, wobei
ein erstes Schalterelement (71) an dem Hebel (6) angeordnet ist, der das Stellglied (42) mit dem Mitnehmer (5) verbindet,
ein zweites Schalterelement (72) an dem ersten Schenkel (2) oder dem zweiten Schenkel (3) befestigt ist, und
der Schalter (7) dazu ausgelegt ist, einen ersten Schaltzustand bei einer korrekten Ausrichtung von Hebel (6) zu dem entsprechenden Schenkel (2, 3) und einen zweiten Schaltzustand bei Verlassen dieser korrekten Ausrichtung einzunehmen.

2. Winkelmesssystem (1) nach Anspruch 1, ferner umfassend ein Mittel zur Fehlererkennung, das dazu ausgelegt ist, ein Sensorsignal von der mindestens einen Winkelerfassungseinheit (4) zu erfassen und, wenn das Sensorsignal einen vorbestimmten Signalbereich verlässt, auf einen Fehler zu schließen.

3. Winkelmesssystem (1) nach Anspruch 2, wobei der Schalter (7) mit dem Sensorsignal der mindestens einen Winkelerfassungseinheit (4) in Reihe geschaltet ist, und bei einem Ändern des Schaltzustands das Mittel zur Fehlererkennung dazu ausgelegt ist, auf einen Fehler zu schließen.

4. Winkelmesssystem (1) nach einem der vorhergehenden Ansprüche, wobei eines der beiden Schalterelemente (71, 72) ein Reed-Sensor und das andere Schalterelement (71, 72) ein den Reed-Sensor betätigbares Gegenelement, insbesondere ein Reed-Kontakt ist.

5. Winkelmesssystem (1) nach einem der Ansprüche 1 bis 3, wobei der Schalter (7) ein berührender Schalter (7) oder ein berührungsloser Schalter (7) ist.

6. Winkelmesssystem (1) nach einem der vorhergehenden Ansprüche, wobei das zweite Schalterelement (72) in ein Gehäuse der am ersten Schenkel (2) befindlichen Winkelerfassungseinheit (4) integriert ist.

7. Winkelmesssystem (1) nach Anspruch 6, wobei die Verbindung zwischen Mitnehmer (5) und Hebel (6) stabiler als eine Verbindung zwischen Hebel (6) und Stellglied (42) ist, und vorzugsweise die Verbindung zwischen Hebel (6) und Stellglied (42) bei einer mechanischen Krafteinwirkung auf den Hebel (6) eine Sollbruchstelle darstellt.

8. Winkelmesssystem (1) nach einem der vorhergehenden Ansprüche, wobei in einem an dem ersten Schenkel (2) angeordneten Gehäuse mindestens zwei Winkelerfassungseinheiten (4) vorhanden sind, um eine Redundanz in der Winkelerfassung zu erhalten und eine Genauigkeit bei einer Winkelerfassung zu verbessern.

9. Winkelmesssystem (1) nach Anspruch 8, wobei der Schalter (7) mit den zwei von den Winkelerfassungseinheiten (4) ausgegebenen Sensorsignalen in Reihe geschaltet ist.

10. Winkelmesssystem (1) nach einem der vorhergehenden Ansprüche, wobei die Winkelerfassungseinheit (4) ein Potentiometer ist, das durch ein Verstellen des den Wiederstandswert des Potentiometers beeinflussenden Stellglieds (42) einen Rückschluss auf einen Winkelversatz ermöglicht.

11. Winkelmesssystem (1) nach einem der vorhergehenden Ansprüche, wobei der erste Schenkel (2) und der zweite Schenkel (3) zueinander nur entlang einer Drehachse verdrehbar sind, und vorzugsweise die auf dem ersten Schenkel (2) befestigten Teile der Winkelerfassungseinheit (4) direkt auf dieser Drehachse angeordnet ist.

12. Arbeitsmaschine, insbesondere Hydraulikbagger, der ein Winkelmesssystem (1) nach einem der vorhergehenden Ansprüche aufweist, wobei vorzugsweise der erste Schenkel (2) ein erstes starres Element eines Baggerarms ist und der zweite Schenkel (3) ein zweites starres Element des Baggerarms ist, das an dem ersten starren Element drehbar angelenkt ist.

## Claims

1. An angle measuring system (1) for measuring an angle between a first leg (2) and a second leg (3), comprising:
at least one angle detection unit (4) for determining an angular offset between an angular element (41) non-rotatably arranged on the first leg (2) and an actuator (42) rotatably arranged relative to the same,
a carrier (5) which is arranged on the second leg (3) and
a lever (6) which connects the actuator (42) to the carrier (5), wherein
during a rotation between the first leg (2) and the second leg (3) the lever (6) performs a corresponding rotatory movement of the actuator (42) with respect to the angular element (41),
**characterized by**
a switch (7) which includes two switch elements (71, 72), wherein
a first switch element (71) is arranged on the lever (6) which connects the actuator (42) to the carrier (5),
a second switch element (72) is attached to the first leg (2) or to the second leg (3), and
the switch (7) is designed to adopt a first switching state when the lever (6) is aligned correctly with the corresponding leg (2, 3), and to adopt a second switching state when this correct alignment is left.

2. The angle measuring system (1) according to claim 1, furthermore comprising a means for error recognition, which is designed to detect a sensor signal from the at least one angle detection unit (4) and, when the sensor signal leaves a predetermined signal range, to infer an error.

3. The angle measuring system (1) according to claim 2, wherein the switch (7) is connected in series with the sensor signal of the at least one angle detection unit (4), and when the switching state is changed, the means for error recognition is designed to infer an error.

4. The angle measuring system (1) according to any of the preceding claims, wherein one of the two switch elements (71, 72) is a Reed sensor and the other switch element (71, 72) is a counter-element actuating the Reed sensor, in particular a Reed contact.

5. The angle measuring system (1) according to any of claims 1 to 3, wherein the switch (7) is a contacting switch (7) or a non-contacting switch (7).

6. The angle measuring system (1) according to any of the preceding claims, wherein the second switch element (72) is integrated into a housing of the angle detection unit (4) disposed on the first leg (2).

7. The angle measuring system (1) according to claim 6, wherein the connection between carrier (5) and lever (6) is more stable than a connection between lever (6) and actuator (42), and preferably the connection between lever (6) and actuator (42) is a predetermined breaking point when a mechanical force acts on the lever (6).

8. The angle measuring system (1) according to any of the preceding claims, wherein in a housing arranged on the first leg (2) at least two angle detection units (4) are present in order to obtain a redundancy in the angle detection and to improve an accuracy of an angle detection.

9. The angle measuring system (1) according to claim 8, wherein the switch (7) is connected in series with the two sensor signals output by the angle detection units (4).

10. The angle measuring system (1) according to any of the preceding claims, wherein the angle detection unit (4) is a potentiometer which by adjusting the actuator (42) influencing the resistance value of the potentiometer allows for a conclusion about an angular offset.

11. The angle measuring system (1) according to any of the preceding claims, wherein the first leg (2) and the second leg (3) are rotatable relative to each other only along an axis of rotation, and preferably the parts of the angle detection unit (4) attached to the first leg (2) are arranged directly on this axis of rotation.

12. A working machine, in particular a hydraulic excavator, which includes an angle measuring system (1) according to any of the preceding claims, wherein preferably the first leg (2) is a first rigid element of an excavator arm and the second leg (3) is a second rigid element of the excavator arm, which is rotatably articulated to the first rigid element.

## Revendications

1. Système de mesure d'angle (1) pour mesurer un angle entre une première branche (2) et une deuxième branche (3), comportant :
au moins une unité de détection d'angle (4) pour déterminer un décalage angulaire entre un élément angulaire (41) agencé sur la première branche (2) solidairement en rotation et un actionneur (42) agencé de manière rotative par rapport à celui-ci,
un entraîneur (5), qui est agencé sur la deuxième branche (3), et
un levier (6), qui relie l'actionneur (42) à l'entraîneur (5), dans lequel
lors d'une rotation entre la première branche (2) et la deuxième branche (3) le levier (6) effectue un mouvement rotatif correspondant de l'actionneur (42) par rapport à l'élément angulaire (41),
**caractérisé par**
un commutateur (7), qui comprend deux éléments commutateurs (71, 72), dans lequel
un premier élément commutateur (71) est agencé sur le levier (6), qui relie l'actionneur (42) à l'entraîneur (5),
un deuxième élément commutateur (72) est fixé sur la première branche (2) ou la deuxième branche (3), et
le commutateur (7) est conçu pour prendre un premier état de commutation avec un alignement correct du levier (6) par rapport à la branche (2, 3) correspondante, et un deuxième état de commutation en quittant cet alignement correct.

2. Système de mesure d'angle (1) selon la revendication 1, en outre comportant un moyen de reconnaissance d'erreurs, qui est conçu pour détecter un signal de capteur provenant de la au moins une unité de détection d'angle (4) et, quand le signal de capteur quitte une plage de signaux prédéterminée, conclure à une erreur.

3. Système de mesure d'angle (1) selon la revendication 2, dans lequel le commutateur (7) est connecté en série avec le signal de capteur de la au moins une unité de détection d'angle (4), et lors d'un changement de l'état de commutation le moyen de reconnaissance d'erreurs est conçu pour conclure à une erreur.

4. Système de mesure d'angle (1) selon l'une quelconque des revendications précédentes, dans lequel l'un des deux éléments commutateurs (71, 72) est un capteur Reed et l'autre élément commutateur (71, 72) est un contre-élément actionnant le capteur Reed, en particulier un contact Reed.

5. Système de mesure d'angle (1) selon l'une quelconque des revendications 1 à 3, dans lequel le commutateur (7) est un commutateur (7) de mise en contact ou un commutateur (7) sans contact.

6. Système de mesure d'angle (1) selon l'une quelconque des revendications précédentes, dans lequel le deuxième élément commutateur (72) est intégré dans un boîtier de l'unité de détection d'angle (4) située sur la première branche (2).

7. Système de mesure d'angle (1) selon la revendication 6, dans lequel la connexion entre l'entraîneur (5) et le levier (6) est plus stable qu'une connexion entre le levier (6) et l'actionneur (42), et de préférence la connexion entre le levier (6) et l'actionneur (42) présente un point destiné à la rupture lors de l'action d'une force mécanique sur le levier (6).

8. Système de mesure d'angle (1) selon l'une quelconque des revendications précédentes, dans lequel dans un boîtier agencé sur la première branche (2) au moins deux unités de détection d'angle (4) sont prévues, afin d'obtenir une redondance dans la détection d'angle et améliorer une précision de la détection d'angle.

9. Système de mesure d'angle (1) selon la revendication 8, dans lequel le commutateur (7) est connecté en série avec les deux signaux de capteur sortis des unités de détection d'angle (4).

10. Système de mesure d'angle (1) selon l'une quelconque des revendications précédentes, dans lequel l'unité de détection d'angle (4) est un potentiomètre, qui permet de conclure à un décalage angulaire en ajustant l'actionneur (42) influençant la valeur de résistance du potentiomètre.

11. Système de mesure d'angle (1) selon l'une quelconque des revendications précédentes, dans lequel la première branche (2) et la deuxième branche (3) peuvent tourner l'une par rapport à l'autre seulement le long d'un axe de rotation, et de préférence les parties de l'unité de détection d'angle (4) fixées sur la première branche (2) sont agencées directement sur cet axe de rotation.

12. Machine de travail, en particulier excavateur hydraulique, qui comprend un système de mesure d'angle (1) selon l'une quelconque des revendications précédentes, dans lequel de préférence la première branche (2) est un premier élément rigide d'un bras excavateur et la deuxième branche (3) est un deuxième élément rigide du bras excavateur, qui est articulé de manière rotative sur le premier élément rigide.
